Europäisches Patentamt

European Patent Office

Office européen des brevets

(11) Numéro de publication : **0 409 080 B1**

# (12) FASCICULE DE BREVET EUROPEEN

(45) Date de publication du fascicule du brevet :
**20.10.93 Bulletin 93/42**

(51) Int. Cl.⁵ : **B29C 51/14**, B60R 13/08, B32B 5/18, B32B 27/22

(21) Numéro de dépôt : **90113349.6**

(22) Date de dépôt : **12.07.90**

(54) **Produits thermoformés constitués d'au moins trois couches, procédé pour leur obtention et leur application.**

(30) Priorité : **18.07.89 LU 87559**

(43) Date de publication de la demande :
**23.01.91 Bulletin 91/04**

(45) Mention de la délivrance du brevet :
**20.10.93 Bulletin 93/42**

(84) Etats contractants désignés :
**AT BE CH DE DK ES FR GB GR IT LI LU NL SE**

(56) Documents cités :
**DE-A- 2 545 700**
**DE-B- 2 753 697**
**FR-A- 2 186 449**
**FR-A- 2 429 092**
**FR-A- 2 497 150**
**US-A- 3 159 698**
**US-A- 3 661 825**
**US-A- 4 728 540**
**US-A- 4 734 323**

(56) Documents cités :
**PATENT ABSTRACTS OF JAPAN, vol. 10, no. 81 (M-465)[2138], 29 mars 1986; & JP-A-60 222 341 (NISSAN JIDOSHA K.K.) 06-11-1985**
**PATENT ABSTRACTS OF JAPAN, vol. 6, no. 158 (C-120)[1036], 19 août 1982; & JP-A-57 784 441 (NIPPON GOSEI GOMU) 17-05-1982**
**PATENT ABSTRACTS OF JAPAN, vol. 8, no. 168 (C-236)[1605], 3 août 1984; & JP-A-59 68 352 (SHOWA DENKO K.K.) 18-04-1984**

(73) Titulaire : **SOMMER S.A.**
**1 rue Neuve**
**L-9501 Wiltz (LU)**

(72) Inventeur : **Bastin, Pierre**
**21 A rue de Laroche**
**B-6650 Bastogne (BE)**

(74) Mandataire : **Meyers, Ernest et al**
**Office de Brevets Meyers & Van Malderen 261 route d'Arlon B.P. 111**
**L-8002 Strassen (LU)**

EP 0 409 080 B1

## Description

### Objet de l'invention et arrière-plan technologique

La présente invention concerne des produits thermoformés constitués d'au moins trois couches de différentes natures, qui sont destinés notamment à la production de revêtements d'isolation.

L'invention s'étend également aux procédés d'obtention de tels produits et à leur application aux garnitures d'habitacles de véhicules automobiles.

Dans les matières thermoformables, notamment dans les matières plastiques telles que celles que l'on utilise en particulier pour des raisons d'isolation phonique, comme revêtements ou garnitures d'intérieur d'habitacles de véhicules automobiles, on introduit en général en quantités variables des éléments plus ou moins volatils tels que des lubrifiants, des agents qualifiés d'adjuvants d'ouvrabilité et des plastifiants. Ces divers produits contribuent à faciliter la mise en oeuvre et à améliorer les caractéristiques desdits revêtements, comme la souplesse et la déformabilité.

Ces additifs ont tendance à migrer dans la matière et à se volatiliser dans l'atmosphère, et ceci d'autant plus que l'action de la chaleur est importante (par exemple dans l'habitacle d'un véhicule exposé au soleil, lorsque les vitres sont fermées) et ensuite à se recondenser sur toute surface froide, en particulier pour les véhicules automobiles sur les vitres et le pare-brise.

Ce phenomène bien connu dans le domaine de l'automobile est couramment appelé "fogging".

Ce phénomène est particulièrement désagréable pour l'automobiliste et il est, de manière générale, peu souhaitable de libérer ces substances volatiles dans l'atmosphère.

Bien entendu, l'inconvénient précité n'est pas limité aux cas de matières constituant des garnitures d'isolation phonique de véhicules.

On peut considérer que le phénomène décrit d'évaporation de matières volatiles contenues dans des matières plastiques de toute nature constitue un inconvénient largement rencontré dans d'autres applications industrielles.

Bien que l'invention sera décrite en référence à l'utilisation dans des garnitures à usage automobile, il doit être bien entendu qu'elle n'est pas nécessairement limitée à cette application spécifique.

### Etat de l'art antérieur

Il est connu par les documents US-A-4 734 323 et FR-A-2 186 449 d'utiliser des garnitures d'isolation phonique de véhicules constituées de plusieurs couches comprenant au moins une couche d'un polymère chargé éventuellement recouverte d'une couche d'un produit d'espacement.

Cependant ces revêtements n'éliminent pas le phénomène de "fogging" car ils ne comportent pas d'élément constitutif freinant l'évaporation de matières volatiles.

De même, les techniques de doublage sont connues en soi et sont en particulier décrites dans les documents FR-A-2 429 092 et US-A-3 159 698.

Afin d'éliminer ce phénomène de "fogging" il existe deux manières de résoudre le problème qui sont exploitées dans le domaine de l'art antérieur.

La première solution consiste à ne pas introduire d'éléments volatils dans la matière plastique constituant le revetement ou de limiter drastiquement la teneur de ces agents.

Les inconvénients de cette méthode sont évidents: difficulté de mise en oeuvre, diminution de la vitesse de production, augmentation du coût du produit ou atténuation des propriétés mécaniques.

La seconde possibilité consiste à protéger la surface du revêtement envisagé par un film ou par un vernis qui s'opposerait à l'évaporation des éléments volatils. Néanmoins, cette solution s'avère peu pratique. En effet, il apparaît des difficultés à obtenir une bonne adhérence entre le vernis et le revêtement (en particulier si la matière de base est grasse). D'autre part, il est nécessaire d'obtenir une imperméabilisation prononcée, voire totale pour toute la gamme des contraintes thermiques futures, ce qui nécessite de réduire fortement la mobilité des éléments volatils. Ceci peut être obtenu soit en réticulant le film, soit en créant un film restant en dessous de sa transition vitreuse pour toute la plage des contraintes thermiques imposées au produit.

L'emploi de matériaux souples est de ce fait exclu pour la production des films d'imperméabilisation et l'introduction d'un film rigide va fragiliser le matériau très souple constituant le revêtement lors des diverses manipulations de transformation et de pose.

### Buts visés par l'invention

L'invention se propose de fournir un produit convenant entre autres à la production de revêtements d'isolation phonique de véhicules et un procédé pour la réalisation d'un tel produit qui permettent d'éviter les inconvénients précités résultant de l'évaporation de matières volatiles dans l'atmosphère ambiante, sans souffrir des difficultés liées aux solutions de l'art antérieur.

**Principaux éléments caractéristiques de l'invention**

Le produit de l'invention est constitué par une feuille de base thermoformable contenant des matières volatiles telles que des lubrifiants, des agents facilitant la mise en oeuvre et/ou des plastifiants constituée d'au moins une couche d'un polymère fortement chargé doublée sur une face d'une couche d'un produit d'espacement, caractérisé en ce que l'autre face de la couche de polymère chargé est revêtue sur une épaisseur d'au moins 1 mm d'une mousse souple.

Généralement, l'épaisseur de mousse est de l'ordre de 1,5 à 2 mm, les producteurs étant d'ailleurs généralement difficilement en mesure de fournir des mousses d'une épaisseur inférieure à 1 mm et présentant une porosité élevée.

Un tel produit peut être obtenu par une technique incluant un thermoformage en vue de constituer un revêtement servant de garniture d'habitacle de véhicules automobiles par exemple. Il est bien entendu posé avec la face revêtue de mousse tournée vers l'intérieur du véhicule.

Bien que l'on eût pu craindre que le thermoformage soit très délicat, il a été constaté de manière surprenante une moins grande sensibilité au perçage de la matière au contact des trous d'aspiration dans le dispositif de formage.

En outre, les possibilités de manipulation du produit avec mousse n'ont pratiquement pas changé par rapport à la référence, constituée par un produit identique sans mousse.

Pour rendre le produit thermoformable, il est nécessaire que la mousse comporte une majorité de pores ouverts.

Néanmoins on a remarqué que la présence de pores fermés ne gêne pas les propriétés "antifogging" et peut même les améliorer.

Il convient cependant de ne pas dépasser une proportion pores fermés/pores ouverts de 50% afin de ne pas mettre en péril le caractère thermoformable du produit.

Le procédé de fabrication du produit à trois couches au moins selon l'invention consiste à d'abord doubler une couche en polymère chargé d'une fine couche de mousse destinée à l'effet antifogging, à soumettre cette double feuille polymère/mousse au thermoformage et à recouvrir l'autre face de la couche thermoformée du polymère chargé d'une couche d'un produit d'espacement.

A titre d'illustration, si l'on applique en surface sur un isolant phonique, une mousse souple très poreuse et aussi fine que 1,5 à 2 mm d'épaisseur (par exemple la mousse type S243, fournie par la société RECTICEL, Wetteren, Belgique), il a été constaté que paradoxalement, l'émission d'éléments volatils était réduite dans une très importante proportion qui est souvent bien meilleure que celle observée avec des vernis classiques, c'est-à-dire en dépit du fait que la mousse constitue une matière souple, poreuse et fine.

En outre, ce produit composite permet d'atteindre un allongement à la rupture proche de 250%.

Avantageusement, la feuille recevant le revêtement de mousse est constituée au départ d'une seule couche homogène d'un PVC fortement chargé d'une matière lourde telle que la craie ou la baryte en vue de lui conférer des propriétés d'inertie très importantes aux ondes acoustiques et convenablement plastifiée en vue de présenter une souplesse facilitant la mise en oeuvre et la pose.

A titre indicatif, le taux et la nature de la charge incorporée dans la matrice de PVC sont avantageusement choisis de manière à obtenir un poids spécifique compris entre 1,5 et 2,5 $g/dm^3$.

A titre d'exemple de compositions correspondant à une application pour des garnitures d'habitacles de véhicules, on peut citer les teneurs suivantes en éléments constitutifs:

| | | |
|---|---|---|
| PVC | 5 | à 20% |
| Plastifiant(s) | 5 | à 20% |
| Charge(s) | 50 | à 85% |
| Divers additifs complémentaires | 0 | à 5% |

Parmi les additifs complémentaires, on peut citer des acides gras tels que l'acide stéarique, des stabilisants, de l'huile de soja époxydée, des pigments, etc.

D'autres matières de base fortement chargées pour lesquelles des phénomènes d'évaporation similaires de matières volatiles se présentent peuvent recevoir un revêtement de mousse de manière similaire. On peut citer les produits du type EPM, EPDM ou même des bitumes ou encore des produits imprégnés de bitume tels que des cartons bitumés, etc.

La mousse souple utilisée constituant la couche "antifogging" est de nature chimique généralement quelconque convenant pour l'effet recherché et peut être constituée par exemple de polyuréthane.

La couche du produit d'espacement est avantageusement constituée d'une épaisse couche d'une mousse expansée également en polyuréthane.

L'opération de doublage de la mousse "antifogging" sur la couche de polymère chargé peut se faire soit en continu en profitant du fait que la matière plastique est encore ramollie à cause d'une opération antérieure, telle qu'un calandrage, soit au cours d'une opération discontinue où la matière aura été ramollie préalablement par de l'air chaud, un cylindre chaud ou un rayonnement infra-rouge par exemple.

Il est bien évident que l'on peut réaliser l'opération de doublage par tout autre procédé connu en soi, visant à obtenir les effets désirés. Citons à titre d'exemples non limitatifs des procédés tels que le laminage à la flamme, l'assemblage sur une surface thermocollante.

La feuille composite constituée d'une couche de polymère chargé doublée d'une fine couche de mousse assurant les propriétés "antifogging" est ensuite soumise au thermoformage.

Bien que les techniques de thermoformage soient connues en soi, les différentes étapes du thermoformage pour obtenir le produit à trois couches selon l'invention sont décrites ci-dessous à titre d'illustration:

a) on fait préalablement chauffer la plaque constituée de la couche de polymère chargé doublée d'une fine couche de mousse dans un four ou une étuve par circulation d'air chaud ou de préférence par un rayonnement infrarouge jusqu'à ce qu'une température convenable soit atteinte;

b) on sort la plaque polymère/mousse "antifogging" du four et on la dispose dans un moule avec la face mousse dirigée vers l'intérieur du moule;

c) on effectue la mise sous vide afin que la plaque épouse parfaitement les formes du moule;

d) on ferme le moule avec un contre-moule:

e) on injecte dans l'espace libre situé entre la plaque en polymère chargé et le contre-moule du polyuréthane bicomposant qui en s'expansant forme la couche constituant le produit d'espacement;

f) une fois la polymérisation de la mousse en polyuréthane réalisée, on ouvre le moule et on retire le produit ou complexe à trois couches au moins selon l'invention.

On observe que le démoulage est avantageusement facilité par la présence de la fine couche de mousse "anti-fogging".

L'invention sera décrite plus en détail à titre d'illustration à l'aide des exemples non limitatifs qui suivent.

## Exemples 1 et 2

La matière de base constituant la couche de polymère chargé est dans les deux exemples est du PVC de la composition suivante (la masse surfacique est de 5 kg/m$^2$, ce qui correspond à une épaisseur de 2,5 mm).

| | |
|---|---|
| PVC | : 8 % |
| DOP | : 12 % |
| Craie et baryte | : 79 % |
| Acide stéarique | : 0,35 % |
| Stabilisant liquide | : 0,3 % |
| Huile de soja époxydée | : 0,35 % |

Ce type de composition est utilisé dans des systèmes d'insonorisation pour automobiles où sa densité élevée associée à une grande souplesse en font un élément d'inertie très important aux ondes acoustiques.

Le produit est obtenu par extrusion en une feuille d'une épaisseur de 0,2 cm de manière classique à une température de 160 °C.

Dans un premier cas (exemple 1), il est mis en oeuvre sans revêtement de mousse et, dans un deuxième cas (exemple 2), on réalise un doublage en continu à chaud à la sortie de l'extrudeuse. A ce moment, la feuille présente une température de surface de l'ordre de 140 °C et elle reçoit un doublage d'une feuille d'une épaisseur de 2 mm de mousse de polyuréthane à pores ouverts du type S243, fournie par la firme RECTICEL précitée, répondant aux caractéristiques physiques suivantes:

| METHODE D'ESSAI | CARACTERISTIQUES | EXPRESSION DES RESULTATS (UNITE) | SPECIFICATIONS |
|---|---|---|---|
| ISO 845 | Densité nette | $kg^3$ | 20-23 |
| ISO/DIS 3386 | Résistance à la compression 40% | KPA | 2,5-4,5 |
| ISO 1856A | Déformation ré-manente à 75% | % | < 20 |
| ISO 1798 | Résistance rupture | KPA | > 150 |
| ISO 1798 | Allongement rupture | % | > 225 |
| RECTICEL 7B | Cellularisation | PPI | 55-65 |

Une étude comparative entre un produit non-revêtu (exemple 1) et un produit revêtu selon la caractéristique de l'invention (exemple 2) a été effectuée avant le thermoformage en procédant aux tests standardisés suivants:

## a) Perte en poids sur charbon actif

Une éprouvette circulaire d'un diamètre de 122 mm (1 dm$^2$) est mise en contact avec 20 g de charbon actif (Columbia Grade ACC, 6/14 inch) répandus uniformément sur la surface de l'éprouvette, pendant 24 heures à 100°C.

La perte en poids est mesurée et est exprimée en grammes par mètre carré.

## b) Dépôt sur vitre après 6 heures à 110°C

Le test est réalisé en exposant une vitre à l'effet d'une feuille de matière pendant 6 heures dans une étuve maintenue à 110°C (projet de norme internationale ISO/DIS 6452).

La distance entre la feuille et la vitre est de l'ordre de 115 mm.

Après 6 heures et refroidissement de la vitre, on mesure la perte de transmission de la lumière blanche (indice de ternissement).

Les résultats obtenus sont les suivants:

|  | Exemple 1 | Exemple 2 |
|---|---|---|
|  | Produit PVC normal prélevé sur zone plate après thermoformage | Même produit mais avec traitement par la mousse citée ci-avant et dans la même zone de prélèvement après formage |
| Perte en poids sur charbon actif 24 h 100°C | 65 g/m$^2$ | 15 g/m2 |
| Dépôt sur vitre 6 h 110°C Transmission de la lumière | 45 % | 95 % |

**Revendications**

1. Produit thermoformé constitué par une feuille de base thermoformable des matières volatiles elle-même constituée d'au moins une couche d'un polymère fortement chargé, doublée sur une face d'une couche d'un produit d'espacement, caractérisé en ce que l'autre face de la couche de polymère chargé est revêtue sur une épaisseur d'au moins 1 mm d'une mousse souple.

2. Produit selon la revendication 1 caractérisé en ce que la mousse souple comporte une majorité de pores ouverts.

3. Produit selon l'une quelconque des revendications précédentes caractérisé en ce que la mousse souple est constituée de polyuréthane.

4. Produit selon l'une quelconque des revendications précédentes caractérisé en ce que l'on met en oeuvre une mousse présentant un indice de porosité exprimé en terme de cellularisation selon la norme RECTICEL 7B de 55 à 65 unités PPI.

5. Produit selon l'une quelconque des revendications précédentes caractérisé en ce que le taux et la nature de la charge incorporée dans la matrice de polymère sont avantageusement choisis de manière à obtenir un poids spécifique compris entre 1,5 et 2,5 g/dm3.

6. Produit selon la revendication 5 caractérisé en ce que la couche de polymère chargé répond à la composition suivante:

| | | |
|---|---|---|
| PVC | 5 | à 20% |
| Plastifiant(s) | 5 | à 20% |
| Charge(s) | 50 | à 85% |
| Divers additifs complémentaires | 0 | à 5% |

7. Produit selon la revendication 6 caractérisé en ce que lesdits additifs complémentaires sont constitués notamment par des acides gras, tels que l'acide stéarique, des stabilisants, de l'huile de soja époxydée ou des pigments.

**8.** Produit selon l'une quelconque des revendications 1 à 4 caractérisé en ce que la couche en polymère chargé est constituée par des produits du type EPM, EPDM, ou encore des bitumes ou des produits imprégnés de bitume tels que des cartons bitumés.

**9.** Procédé pour la production d'un produit thermoformé selon l'une quelconque des revendication 1 à 8 caractérisé en ce que l'on double une couche en polymère chargé d'une fine couche de mousse destinée à l'effet "antifogging", en ce que l'on soumet cette double feuille polymère/mousse au thermoformage, et en ce que l'on recouvre l'autre face de la couche thermoformée du polymère chargé d'une couche d'un produit d'espacement.

**10.** Procédé pour la production d'un produit thermoformé selon la revendication 9 caractérisé en ce qu'on procède à une opération de doublage de la mousse sur la feuille de base en polymère chargé en continu en profitant du fait que la matière plastique est encore ramollie.

**11.** Procédé pour la production d'un produit thermoformé selon la revendication 9 caractérisé en ce qu'on procède à une opération de doublage de la mousse sur la feuille de base de manière discontinue après que la matière de la feuille de base aura été préalablement ramollie, de préférence par de l'air chaud, à l'aide d'un cylindre chaud ou par un rayonnement infrarouge.

**12.** Procédé pour la production d'un produit thermoformé selon la revendication 9 caractérisé en ce qu'on procède à une opération de doublage de la mousse sur la feuille de base par laminage à la flamme.

**13.** Procédé pour la production d'un produit thermoformé selon la revendication 9 caractérisé en ce qu'on procède à une opération de doublage de la mousse sur la feuille de base thermocollante.

**14.** Application du produit selon l'une quelconque des revendications 1 à 8 à la réalisation de revêtements ou de garnitures d'habitacles de véhicules automobiles en vue d'éliminer ou réduire le phénomène d'évaporation d'éléments volatils.

## Claims

**1.** Thermoformed product consisting of a thermoformable base sheet containing volatile substances, itself consisting of at least one layer of a highly filled polymer, lined on one side with a layer of a spacing product, characterised in that the other side of the layer of filled polymer is coated with a flexible foam over a thickness of at least 1 mm.

**2.** Product according to Claim 1, characterised in that the flexible foam contains a majority of open pores.

**3.** Product according to either of the preceding claims, characterised in that the flexible foam consists of polyurethane.

**4.** Product according to any one of the preceding claims, characterised in that a foam exhibiting a porosity value of 55 to 65 PPI units expressed in term of cell formation according to the Recticel Standard 7B is used.

**5.** Process according to any one of the preceding claims, characterised in that the proportion and the nature of the filler incorporated in the polymer matrix are advantageously chosen so as to obtain a specific weight of between 1.5 and 2.5 $g/dm^3$.

**6.** Product according to Claim 5, characterised in that the layer of filled polymer corresponds to the following composition:

```
PVC                              5    to 20 %
Plasticiser(s)                   5    to 20 %
Filler(s)                       50    to 85 %
Various complementary additives  0    to  5 %.
```

7. Product according to Claim 6, characterised in that the said complementary additives consist especially of fatty acids such as stearic acid, stabilisers, epoxidised soya oil or pigments.

8. Product according to any one of Claims 1 to 4, characterised in that the layer of filled polymer consists of products of the EPM or EPDM type, or else of bitumens or bitumen-impregnated products such as bituminised cardboards.

9. Process for the production of a thermoformed product according to any one of Claims 1 to 8, characterised in that a layer of filled polymer is lined with a thin layer of foam intended for the "antifogging" effect, in that this polymer/foam double sheet is subjected to thermoforming, and in that the other side of the thermoformed layer of the filled polymer is covered with a layer of a spacing product.

10. Process for the production of a thermoformed product according to Claim 9, characterised in that an operation of lining the foam onto the base sheet of filled polymer is carried out continuously by taking advantage of the fact that the plastic substance is still softened.

11. Process for the production of a thermoformed product according to Claim 9, characterised in that an operation of lining the foam onto the base sheet is carried out noncontinuously after the substance of the base sheet has been softened beforehand, preferably with hot air, with the aid of a hot roll or using infrared radiation.

12. Process for the production of a thermoformed product according to Claim 9, characterised in that an operation of lining the foam onto the base sheet is carried out by flame lamination.

13. Process for the production of a thermoformed product according to Claim 9, characterised in that an operation of lining the foam onto the heat-adhesive base sheet is carried out.

14. Application of the product according to any one of Claims 1 to 8 to the production of coatings or trims for motor vehicle cabins with a view to eliminating or reducing the phenomenon of evaporation of volatile components.

## Patentansprüche

1. Thermogeformtes Produkt bestehend aus einer thermoformbaren Basisschicht welche flüchtige Substanzen enthält und welche aus wenigstens einer stark gefüllten auf einer Seite mit einem Abstandsprodukt beschichteten Polymerschicht besteht, dadurch gekennzeichnet, dass die andere Seite der gefüllten Polymerschicht auf einer Dicke von wenigstens ein Millimiter mit geschmeidigem Schaum bedeckt ist.

2. Produkt nach Anspruch 1, dadurch gekennzeichnet, dass der geschmeidige Schaum eine Mehrzahl von offenen Poren aufweist.

3. Produkt nach einem der vorhergehenden Ansprüche, dadurch gekennzeichnet, dass der geschmeidige Schaum aus Polyurethan besteht.

4. Produkt nach einem der vorhergehenden Anspüche, dadurch gekennzeichnet, dass man einen Schaum verwendet mit einem Porositätsgrad von 55 bis 65 PPI Einheiten ausgedrückt in Zellulierung nach der Norm RECTICEL 7 B.

5. Produkt nach einem der vorhergehenden Ansprüche, dadurch gekennzeichnet, dass das Verhältnis und die Art der Füllung welche dem PVC Basismaterial zugegeben werden vorzugsweise so gewählt werden, dass ein spezifisches Gewicht von 1,5 bis 2,5 g/dm$^3$ erreicht wird.

6. Produkt nach Anspruch 5, dadurch gekennzeichnet, dass die gefüllte Polymerschicht folgende Zusammensetzung aufweist :

```
PVC                                    5  bis  20 %
Weichmacher                            5  bis  20 %
Füllmaterial                          80  bis  85 %
Verschiedene ergänzende Zusatzstoffe   0  bis   5 %.
```

7. Produkt nach Anspruch 6, dadurch gekennzeichnet, dass die ergänzenden Zusatzstoffe aus Fettsäuren wie Stearinsäure, Stabilisatoren, epoxidiertes Sojaöl oder Pigmenten bestehen.

8. Produkt nach einem der Ansprüche 1 bis 4, dadurch gekennzeichnet, dass die gefüllte Polymerschicht aus Produkten vom Typ EPM, EPDM oder aus Asphalt oder aus mit Asphalt imprägnierten Produkten wie bitumierte Pappe, besteht.

9. Verfahren zur Herstellung eines thermogeformten Produktes nach einem der Ansprüche 1 bis 8, dadurch gekennzeichnet, dass eine gefüllte Polymerschicht mit einer dünnen für den "antifogging" Effekt bestimmten Schaumschicht bedeckt wird, dass man diese doppelte Schicht Polymer/Schaum einem Thermoformungsverfahren aussetzt und dass die andere Seite der thermogeformten Schicht des gefüllten Polymers mit einem Abstandsprodukt bekleidet wird.

10. Verfahren zur Herstellung eines thermogeformten Produktes nach Anspruch 9, dadurch gekennzeichnet, dass die Auftragung des Schaums auf die aus gefülltem Polymer bestehende Basisschicht kontinuierlich erfolgt, wobei der noch weiche Zustand des Kunststoffes benutzt wird.

11. Verfahren zur Herstellung eines thermogeformten Produktes nach Anspruch 9, dadurch gekennzeichnet, dass die Auftragung des Schaums auf die Basisschicht diskontinuierlich erfolgt nachdem das Material der Basisschicht vorhergehend erweicht worden ist, vorzugsweise mit Warmluft, mit einer aufgeheizten Walze oder mit Infrarotstrahlung.

12. Verfahren zur Herstellung eines thermogeformten Produktes nach Anspruch 9, dadurch gekennzeichnet, dass die Auftragung des Schaums auf die Basisschicht durch Flammenwalzung geschieht.

13. Verfahren zur Herstellung eines thermogeformten Produktes nach Anspruch 9, dadurch gekennzeichnet, dass die Auftragung des Schaums auf einer thermoklebenden Basisschicht erfolgt.

14. Anwendung des Produktes nach einem der Ansprüche 1 bis 8 zur Herstellung von Verkleidungen oder Innengarnituren von Kraftfahrzeugen um das Phänomen der Verdampfung flüchtiger Substanzen zu verhindern oder zu verringern.